# EUROPÄISCHE PATENTSCHRIFT

(11) **EP 1 898 280 B1**
(45) Veröffentlichungstag und Bekanntmachung des Hinweises auf die Patenterteilung: **06.07.2011**
(21) Anmeldenummer: 06018624.4
(22) Anmeldetag: 06.09.2006
(51) Int. Cl.: G05B 19/042

(54) **Steuerungsvorrichtung mit einem Bus zum Betrieb einer Maschine**
Control device having a bus for operating a machine
Dispositif de commande doté d'un bus destiné au fonctionnement d'une machine

(43) Veröffentlichungstag der Anmeldung: 12.03.2008
(73) Patentinhaber: Rotzler GmbH + Co. KG, 79585 Steinen (DE)
(72) Erfinder: Rotzler, Jürgen, 79585 Steinen (DE); Grundmann, Thomas, 79618 Rheinfelden (DE); Heidecker, Peter, 79585 Steinen (DE)
(74) Vertreter: Wasmuth, Rolf

(56) Entgegenhaltungen:
- WO-A-2005/103848
- US-A1- 2003 193 475
- US-A1- 2006 059 478

## Beschreibung

Die Erfindung betrifft eine Steuerungsvorrichtung zum Betrieb einer Maschine, insbesondere einer industriellen Fertigungsanlage, einer Förderanlage, eines Krans, einer Seilzugvorrichtung, einer Winde oder dgl. nach dem Oberbegriff des Anspruchs 1.

Eine derartige Steuerungsvorrichtung umfaßt im allgemeinen ein Bedienteil, welches mit einer Steuerung verbunden ist, in der zumindest eine Ansteuereinheit vorgesehen ist. Die Ansteuereinheit ist zum Betrieb z.B. einer Winde mit Aktoren und/oder Sensoren der Winde verbunden. Zur Verbindung des Bedienteils mit der Ansteuereinheit wird eine Busleitung verwendet, über die die Ansteuereinheit alle Steuerungsbefehle von dem Bedienteil erhält. Die Ansteuereinheit verarbeitet die Steuerungsbefehle z.B. mittels eines Prozessors und vorgesehenen Softwareapplikationen entsprechend und betätigt die über Treiber angeschlossenen Aktoren.

In modernen Steuerungsvorrichtungen ist das Bedienteil über eine Steckverbindung auswechselbar mit der Steuerung verbunden. Damit wird die Möglichkeit geschaffen, von unterschiedlichen Orten die Maschine zu steuern.

Die Steuerung umfaßt auch eine Überwachungseinheit für ein Betriebssignal eines angeschlossenen Bedienteils, um bei Ausbleiben des Betriebssignals die Steuerung abzuschalten. Nach dem Umstecken des Bedienteils muß die Steuerung neu gestartet werden, was eine unerwünschte Unterbrechung der Arbeit bedingt.

Der Erfindung liegt die Aufgabe zugrunde, eine Steuerungsvorrichtung zum Betrieb einer Maschine derart auszubilden, daß ein Bedienteil ohne Betriebsunterbrechung der Steuerung ausgetauscht werden kann.

Die Aufgabe wird erfindungsgemäß nach den Merkmalen des Anspruchs 1 gelöst.

Das die Funktion des Bedienteils anzeigende Betriebssignal ist der Heartbeat des angeschlossenen Bedienteils. Wie Systeme mittels eines Heartbeats überwacht werden können, zeigt die Druckschrift US 2006/70059478. Um zu verhindern, daß aufgrund des fehlenden Heartbeats eines abgezogenen Bedienteils ein Stillstand der Steuerung ausgelöst wird, wird der Betriebszustand des Bedienteils durch eine Erkennungseinheit überwacht und das Ausgangssignal der Erkennungseinheit durch die Steuerung ausgewertet. Bei eingeschaltetem Bedienteil wird der Heartbeat von der Steuerung verarbeitet; bei ausgeschaltetem Bedienteil wird das Fehlen des Heartbeat-Signals ignoriert. Dies erfolgt vorteilhaft durch einen Prozessor der Ansteuereinheit, der hierzu entsprechende Softwareapplikationen abarbeitet.

Damit eröffnet sich z.B. die Möglichkeit, daß während des Betriebs der Maschine ein zum Beispiel zweites Bedienteil abgezogen und an einer anderen Stelle der Steuerung wieder eingesteckt werden kann, ohne daß aufgrund des fehlenden Heartbeat-Signals das Gesamtsystem in den sicheren Zustand schaltet, also nicht mehr betriebsbereit ist.

Vorteilhaft überwacht die Erkennungseinheit den vom Bedienteil aufgenommenen Strom. Wird ein vorgegebener Schwellwert überschritten, gibt die Erkennungseinheit ein Ausgangssignal für den Zustand "Bedienteil eingeschaltet" ab; bei Unterschreiten des Schwellwertes wird ein Ausgangssignal für den Zustand "Bedienteil ausgeschaltet" abgegeben. Dabei ist zweckmäßig das Ausgangssignal für "Bedienteil ausgeschaltet" ein aktives Signal, insbesondere ein digitales Spannungssignal.

Das zur Überwachung genutzte Betriebssignal einer Bedieneinheit ist insbesondere das Hartbeat-Signal zumindest einer Terminalplatine, die als Schnittstelle zwischen Bedienelementen des Bedienteils wie Taster, Schalter, Joystick o. dgl. und der Busleitung vorgesehen ist. In einem Bedienteil ist zumindest eine Terminalplatine vorhanden; es können auch mehrere Terminalplatinen sein.

Um eine redundante Sicherheit zu erhalten, ist vorgesehen, daß das Bedienteil oder mehrere Bedienteile und die Ansteuereinheit oder auch mehrere Ansteuereinheiten in einem gemeinsamen Schaltkreis für ein Hardware NOT-AUS eingebunden sind. Darüber hinaus sind das/die Bedienteil(e) und die Ansteuereinheit(en) über die Busleitung in einen gemeinsamen Software NOT-AUS Kreis eingebunden.

Um ein Bedienteil bei laufender Steuerung abziehen zu können, ist das Bedienteil über einen Funktionsbaustein mit der Steuerung bzw. der Busleitung und/oder einem gemeinsamen Schaltkreis für ein Hardware NOT-AUS verbunden. Hierzu ist die Erkennungseinheit zweckmäßig in dem Funktionsbaustein eingebaut, wobei der Funktionsbaustein darüber hinaus einen Taster zur Überbrückung des Hardware NOT-AUS Tasters am Bedienteil aufweist. Auch der Überbrückungstaster wird überwacht und seine Betätigung vorzugsweise über die Busleitung der Steuerung angezeigt. Dadurch kann die ordnungsgemäße Funktion des Überbrückungstasters überwacht werden. Dies erfolgt vorteilhaft über ein Zeitglied, das mit Betätigung des Überbrückungstasters gestartet wird. Wird nach einer vorgegebenen Zeitspanne der Überbrückungstaster nicht gelöst, wird aufgrund des Ablaufs des Zeitgliedes die Steuerung bzw. das Gesamtsystem in den sicheren Zustand geschaltet.

Es ist zweckmäßig, den Funktionsbaustein über einen ersten Stecker mit der Steuerung zu verbinden und über einen zweiten Stecker die Verbindung zu einem Bedienteil herzustellen. Dabei ist der zweite Stecker vorzugsweise mit einer formschlüssig eingreifenden Schnellkupplung versehen.

Über die Stecker wird eine Verbindung sowohl mit der Busleitung, mit der Spannungsversorgung als auch mit dem Schaltkreis des Hardware NOT-AUS hergestellt.

Das verwendete Bussystem kann ein beliebiges System sein; vorzugsweise wird ein CAN-Bus, insbesondere ein CANopen-Bus verwendet.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: eine erfindungsgemäße Steuerungsvorrichtung in schematischer Darstellung,
- Fig. 2: ein Schaltbild eines zwischen einem Bedienteil und der Steuerung anzuschließenden Funktionsbaustein,
- Fig. 3: ein in einem Gehäuse montierter Funktionsbaustein zum Anschluß zwischen der Steuerungsvorrichtung und einem Bedienteil.

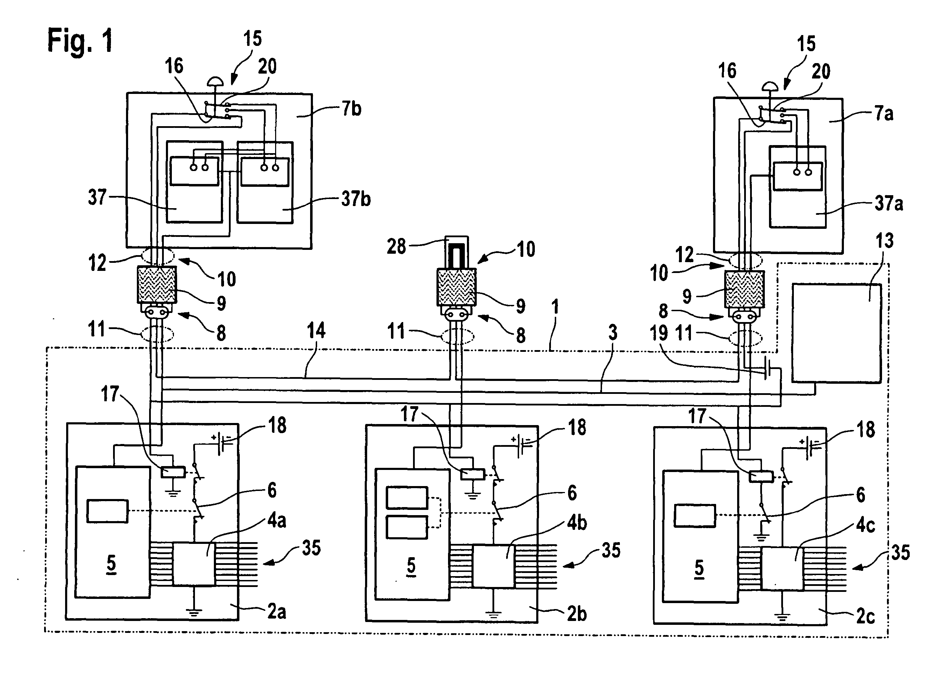

In Fig. 1 ist in schematischer Darstellung der Aufbau einer Steuerungsvorrichtung gezeigt. Eine derartige Steuerungsvorrichtung besteht aus der Steuerung 1 selbst, die zum Betrieb einer Maschine dient, und zumindest einem Bedienteil 7a, 7b, über das die Maschine gesteuert wird. Unter Maschine wird insbesondere verstanden eine industrielle Fertigungsanlage, eine Seilzugvorrichtung, eine Winde wie z.B. eine Ankerwinde, ein Kran, eine Bergeeinrichtung oder dgl. Gerät.

Die Steuerung 1 enthält zumindest eine Ansteuereinheit 2a, 2b, 2c, die jeweils mit einer Vielzahl von Aktoren und/oder Sensoren zum sicheren Betrieb der Maschine verbunden ist. Im Ausführungsbeispiel sind drei Ansteuereinheiten 2a, 2b, 2c gezeigt, die jeweils eine entsprechende Maschine über Ausgangstreiber 4a, 4b, 4c und entsprechende Anschlußleitungen 35 steuert. So kann die Ansteuereinheit 2a zum Betrieb einer Winde, die Ansteuereinheit 2b zum Betrieb eines Kranes und die Ansteuereinheit 2c zum Betrieb einer Bergeeinrichtung an z.B. einem Fahrzeug vorgesehen sein.

Die im Ausführungsbeispiel gezeigte drei Ansteuereinheiten 2a, 2b, 2c sind über eine Busleitung 3 untereinander und mit entsprechenden Bedienteilen 7a, 7b verbunden. Jede Ansteuereinheit 2a, 2b, 2c ist über einen Ausgangstreiber 4a, 4b, 4c mit entsprechenden Aktoren und/oder Sensoren zum Betrieb der zugeordneten Maschine verbunden. Dieser Ausgangstreiber wird in Abhängigkeit von Software-Applikationen gesteuert, die in einer elektronischen Einheit wie einem Prozessor 5 abgearbeitet werden. Darüber hinaus kann über eine entsprechende Applikation auch ein Schalter 6 angesteuert werden, der nach Auswertung von über die Busleitung 3 erhaltenen Signalen geöffnet oder geschlossen ist (Software NOT-AUS).

Die im Ausführungsbeispiel gezeigte Busleitung 3 ist vorteilhaft ein CAN-Bus, insbesondere ein CANopen-Bus. Auch andere Bussysteme sind vorteilhaft einsetzbar.

Das an die Steuerung 1 angeschlossene Bedienteil 7a, 7b weist ein oder mehrere Terminalplatinen 37, 37a, 37b auf, über die als Schnittstelle geeignete, nicht dargestellte Steuerungselemente wie Schalter, Drehregler, Joysticks oder dgl. angeschlossen sind. Die Bedienteile 7a, 7b können gleich ausgeführt sein; im gezeigten Ausführungsbeispiel ist mit 7a ein Standardbedienteil gezeigt, mit 7b ein Sonderbedienteil, über welches zum Beispiel zusätzliche Funktionen steuerbar sind.

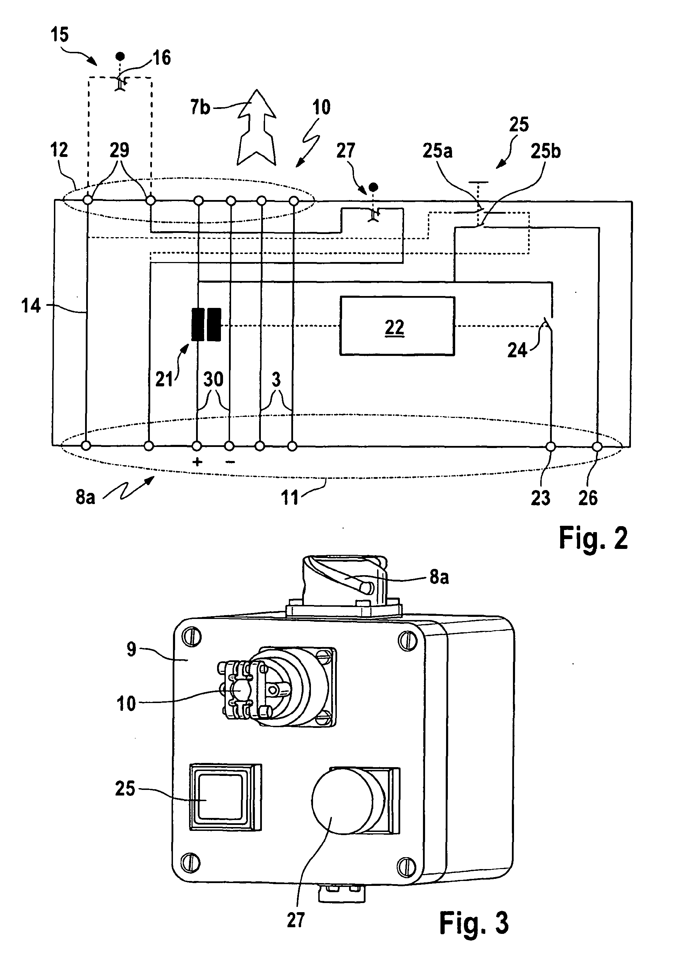

Die Bedienteile 7a, 7b sind über eine Steckverbindung 8 an die Steuerung 1 anzuschließen, wobei erfindungsgemäß zwischen einem Bedienteil 7a, 7b und dem Steckanschluß 8 ein Funktionsbaustein 9 geschaltet ist. Wie Fig. 3 zeigt, hat der Funktionsbaustein einen Anschluß 8a für den Steckanschluß 8 der Steuerung 1 sowie einen zweiten Steckanschluß 10 zum Anschluß des Bedienteils 7a, 7b.

Das mehradrige Kabel 11 der Steuerung 1 ist im wesentlichen durch den Funktionsbaustein durchgeschleift und Ader für Ader polrichtig an das Kabel 12 des Bedienteils 7a, 7b angeschlossen.

Die Bedienteile 7a, 7b, alle Ansteuereinheiten 2a, 2b und 2c sowie eine im Ausführungsbeispiel vorteilhaft vorgesehene Mastersteuerung 13 des Bussystems sind in einen gemeinsamen Schaltkreis 14 für ein Hardware NOT-AUS eingebunden. Jedes Bedienteil 7a, 7b weist einen mechanischen NOT-AUS Taster 15 auf, dessen Öffner 16 in Reihe im Schaltkreis 14 liegen. Der Schaltkreis führt dann und nur dann Spannung, wenn alle Öffner 16 vorhandener NOT-AUS Taster 15 geschlossen sind. Führt der NOT-AUS Schaltkreis 14 Spannung, sind die Schaltrelais 17 der Ansteuereinheiten 2a, 2b und 2c aktiviert; die jeweiligen Ausgangstreiber 4a, 4b und 4c sind mit einer Betriebsspannungsquelle 18 verbunden, die zur Betätigung des angeschlossenen Aktoren notwendig sind.

Der Hardware NOT-AUS Schaltkreis 14 wird von einer Spannungsquelle 19 gespeist, wobei Spannungen von 12 V oder 24 V zweckmäßig sind.

Jeder NOT-AUS Taster 15 der Bedienteile 7a, 7b weist neben dem Öffner 16 einen Schließer 20 auf, über den die Betätigung des NOT-AUS Tasters 15 an die Busleitung 3 weitergegeben wird. Die Steuerung 1 erkennt somit auch softwaremäßig das Drücken eines NOT-AUS Tasters 15. Das beim Drücken des Tasters 15 durch Schließen bzw. Öffnen des Schließers 20 auftretende Signal wird auf die Busleitung 3 gegeben, in einer im Prozessor 5 ablaufenden Applikation verarbeitet und der Schalter 6 entsprechend geöffnet. Das NOT-AUS System ist somit redundant sowohl softwaremäßig als auch hardwaremäßig vorhanden. Fällt ein System aus, ist die Funktion des NOT-AUS über das andere System weiter gewährleistet.

In den Ansteuereinheiten 2a und 2b liegt der Schalter 6 in Reihe mit dem Schließer des Relais 17; es kann auch vorteilhaft sein, entsprechend Ansteuereinheit 2c den Schalter 6 in den Erregerkreis des Relais 17 einzubinden. Beim Öffnen des Schalters 6 fällt dann das Relais 17 ab und dessen Schließer öffnet, so daß die Spannungsversorgung zum Ausgangstreiber 4c unterbrochen ist.

Der Funktionsbaustein 9, der in der Art eines Zwischensteckers zwischen ein Bedienteil 7a, 7b und der Steuerung 1 eingesteckt ist, hat einen schaltungstechnischen Aufbau, wie er in Fig. 2 schematisch wiedergeben ist.

Der CAN-Bus wird von dem Steckanschluß 8 der Steuerung 1 ohne weitere Funktion elektrisch auf den Steckanschluß 10 des Bedienteils 7a, 7b durchgeschleift. In gleicher Weise wird eine Spannungsversorgung von der Steuerung 1 zum Bedienteil 7a, 7b durchgeschleift.

Wie Fig. 2 zeigt, ist eine Leitung der Spannungsversorgung mit einem Strommeßteil 21 versehen, über das der zum Bedienteil fließende Strom galvanisch getrennt erfaßt wird. In einer Erkennungseinheit wird das Ausgangssignal des Strommeßteils 21 ausgewertet. Überschreitet das Ausgangssignal einen vorgegebenen Schwellwert, gibt die Erkennungseinheit ein Ausgangssignal für den Zustand "Bedienteil eingeschaltet" ab; bei Unterschreiten des Schwellwertes wird die Erkennungseinheit 22 ein Ausgangssignal für den Zustand "Bedienteil ausgeschaltet" abgeben. Im gezeigten Ausführungsbeispiel nach Fig. 2 wird an einem Pin 23 ein digitales Signal ausgegeben; dieses kann im ausgeschalteten Zustand des Bedienteils zu "1" gesetzt werden und im eingeschalteten Zustand des Bedienteils zu "0". In einfacher Weise wird hierzu über einen von der Erkennungseinheit 22 gesteuerten Schalter 24 die Versorgungsspannung 30 auf den Pin 23 entweder durchgeschaltet oder nicht durchgeschaltet.

Der Funktionsbaustein 9 weist ferner einen Überbrückungstaster 25 auf, der parallel zu dem mechanischen NOT-AUS Taster 15 des Bedienteils 7a, 7b liegt. Der mechanische NOT-AUS Taster 15 besteht aus zwei Schließern 25a, 25b, wobei der eine Schließer 25a parallel zum Öffner 16 des mechanischen NOT-AUS Tasters 15 des Bedienteils liegt und der andere Schließer 25b die Versorgungsspannung 30 auf einen Ausgangspin 26 schaltet. Ist der Überbrückungstaster 25 gedrückt, wird aufgrund des Schließens des Schließers 25a der mechanischen NOT-AUS Taster 15 des Bedienteils bezüglich des Hardware Not-Aus wirkungslos und zugleich aufgrund des Schließens des Schließers 25b die Versorgungsspannung 30 auf den Ausgangspin 26 geschaltet. Öffnet der Überbrückungstaster 25, ist der mechanische NOT-AUS Taster 15 des angeschlossenen Bedienteils 7a, 7b wieder redundant aktiv und aufgrund des Öffnens des Schließers 25b der Ausgangspin 26 spannungslos. Am Ausgangspin 26 liegt somit ein digitales Signal an, welches den Zustand des Überbrückungstasters 25 anzeigt. Dieses digitale Signal ist bei gedrücktem Taster 25 zu "1" gesetzt; ist der Taster 25 offen, ist das digitale Signal am Ausgangspin 26 "0".

Es kann vorteilhaft sein, in den Hardware-Schaltkreis 14 des NOT-AUS einen weiteren mechanischen NOT-AUS Taster 27 einzuschleifen, so daß für das Bedienpersonal auch am Funktionsbaustein 9 ein NOT-AUS Taster 27 zur Verfügung steht. Dieser NOT-AUS Taster 27 ist unabhängig davon aktiv, ob ein Bedienteil 7a oder 7b eingesteckt ist oder nicht. Wird an einem Steckanschluß 8 der Steuerung 1 kein Bedienteil angeschlossen (Fig. 1 - Mitte), wird auf den Steckanschluß 10 eine Brücke 28 aufgesteckt, die anstelle des Überbrückungstasters 15 den Hardware NOT-AUS Schaltkreis 14 schließt. Dadurch löst der Hardware NOT-AUS nicht aus, auch wenn an dem Steckanschluß 8 kein Bedienteil eingesteckt ist.

Jedes Bedienteil 7a, 7b bzw. die in einem Bedienteil 7a, 7b eingebauten Terminalplatinen 37, 37a, 37b senden regelmäßig ein "Heartbeat" genanntes Signal aus, das über den Bus allen Einheiten der Steuerung 1 mitgeteilt wird. In vorzugsweise jeder der in der Steuerung 1 integrierten Ansteuereinheiten 2a, 2b, 2c wird das empfangene Heartbeat - Signal verarbeitet. Bleibt das Heartbeat - Signal aus, geht die Steuerung 1 davon aus, das die entsprechende Terminalplatine 37, 37a, 37b eines Bedienteils 7a, 7b ausgefallen ist; zur Sicherheit wird jede der über eine Ansteuereinheit betriebenen Maschinen in einen sicheren Zustand gefahren, wozu vom Prozessor 5 z.B. eine entsprechende Softwareapplikation gestartet wird, anhand deren Steuersignalen der Ausgangstreiber 4a, 4b, 4c und die über die Leitungen 35 angeschlossenen Aktoren betätigt werden.

Erfindungsgemäß ist nun vorgesehen, über eine Erkennungseinheit 22 das über einen Steckanschluß 8, 10 angeschlossene Bedienteil 7a, 7b auf seinen Betriebszustand zu überwachen. Dies kann - wie Fig. 2 zeigt - durch überwachen des in das Bedienteil 7a, 7b fließenden Stroms erfolgen. Im Ausführungsbeispiel nimmt das Bedienteil im ausgeschalteten Zustand einen Ruhestrom von etwa 60 mA bis 80 mA auf, während es im Betrieb eine Stromaufnahme von etwa 140 mA bis 180 mA hat. So kann durch Setzen eines vorgegebenen Schwellwertes von zum Beispiel 100mA über die Erkennungseinheit 22 leicht ausgewertet werden, ob das an den Funktionsbaustein 9 angeschlossene Bedienteil 7a, 7b eingeschaltet oder ausgeschaltet ist.

Wird das angeschlossene Bedienteil 7a, 7b vom Benutzer ausgeschaltet, so liegt am Pin 23 ein den Zustand anzeigendes digitales Signal an, welches - zum Beispiel über die Busleitung 3 - den Ansteuereinheiten 2a, 2b und 2c mitgeteilt wird. Die im Prozessor 5 ablaufende Applikation wird bei Auftreten des Signals auf dem Pin 23 - Bedienteil ausgeschaltet - das deshalb fehlende Heartbeat-Signal nicht zum Anlaß nehmen, die Steuerung in einen sicheren Zustand zu überführen. Somit kann trotz Deaktivierung eines Bedienteils 7a, 7b die Steuerung 1 störungsfrei und ohne Unterbrechung weiterarbeiten.

Durch die Unterdrückung der Auswertung des Heartbeat-Signals ergibt sich die Möglichkeit, während des Betriebs der Steuerung 1 ein Bedienteil 7a, 7b am Funktionsbaustein 9 einzustecken oder auszustecken.

Soll zum Beispiel das Bedienteil 7b am Ort des Funktionsbausteins 9 ausgesteckt und an einem Ort eines anderen Funktionsbausteins 9 wieder eingesteckt werden, wird folgendermaßen vorgegangen:

Zunächst wird das auszusteckende Bedienteil 7b ausgeschaltet. Die Erkennungseinheit 22 registriert den ausgeschalteten Zustand, schließt den Schalter 24 und gibt auf den Pin 23 ein entsprechendes digitales Signal - Bedienteil ausgeschaltet - an die Steuerung 1 ab. Die einzelnen, an den Bus 3 angeschlossenen Ansteuereinheiten 2a, 2b, 2c registrieren dieses Signal und ignorieren den ausbleibenden Heartbeat des Bedienteils 7b. Die Steuerung 1 bleibt aktiv.

Bevor das Bedienteil 7b am Steckanschluß 10 abgezogen wird, wird der Überbrückungstaster 25 gedrückt. Damit wird der mechanische NOT-AUS Taster 15 des Bedienteils 7b überbrückt, so daß beim Abziehen vom Steckanschluß 10 kein Hardware NOT-AUS ausgelöst wird. Während des Abziehens des Bedienteils 7b muß der Taster 25 gedrückt bleiben.

Nach Abziehen des Bedienteils 7b wird auf den Steckanschluß 10 eine Brücke 28 aufgesteckt, die die offenen Kontakte 29 des NOT-AUS Tasters 15 des Bedienteils 7b überbrückt. Nun kann der Überbrückungstaster 25 wieder losgelassen werden; der hardwaremäßige NOT-AUS Schaltkreis 14 ist weiterhin geschlossen; es wird kein hardwaremäßiges NOT-AUS ausgelöst.

Um sicherzustellen, daß nicht aufgrund einer Fehlfunktion oder Fehlbedienung der Überbrückungstaster 25 gedrückt bleibt, wird der Steuerung 1 das Drücken des Tasters 25 über den Ausgangspin 26 digital gemeldet. Mit Auftreten des Signals auf dem Ausgangspin 26 wird in einer oder jeder Ansteuereinheit 2a, 2b, 2c oder in einer vorteilhaft vorgesehenen Mastersteuerung 13 ein Zeitglied gestartet, welches so ausgelegt ist, daß eine Bedienungsperson ausreichend Zeit zum Abziehen des Bedienteils 7b und Aufstecken der Brücke 28 verbleibt. Wird die vorgegebene Zeitspanne zum Abziehen des Bedienteils 7b und Aufstecken der Brücke 28 überschritten, wird in der Steuerung 1 ein softwaremäßiges NOT-AUS ausgelöst. Alle,Ansteuereinheiten 2a, 2b, 2c der Steuerung 1 werden gestoppt; die Maschinen bleiben stehen.

Das von der Steuerung 1 getrennte Bedienteil 7b kann nun an einem anderen Ort wieder angeschlossen werden. Dies ist zum Beispiel bei Kränen, bei Lastwagen mit einer Seilwinde oder dgl. zweckmäßig, wenn zum Beispiel die Bedienungsperson zur Kontrolle der zu hebenden Last von der einen Seite des Fahrzeugs auf die andere Seite wechseln will.

Zum Einstecken wird wiederum der Taster 25 des Funktionsbausteins 9 gedrückt, die Brücke 28 abgezogen und das Bedienteil 7b eingesteckt. Der Überbrückungstaster 25 kann nun gelöst werden; der Hardware NOT-AUS Schaltkreis 14 ist über den mechanischen NOT-AUS Taster 15 des Bedienteils 7b aktiv.

Mit Einschalten des Bedienteils 7b reagiert die Erkennungseinheit 22, öffnet den Schalter 24, wodurch auf dem Pin 23 das digitale Signal "0" ansteht, welches die Steuerung 1 als "Bedienteil eingeschaltet" zur Kenntnis nimmt. Der von dem Bedienteil 7b bzw. dessen Terminalplatine 37, 37b nun wieder gesendete Heartbeat wird vom System wieder ausgewertet, so daß bei unplanmäßigem Ausbleiben des Heartbeats die Steuerung in einen sicheren Zustand gefahren wird.

## Patentansprüche

1. Steuerungsvorrichtung zum Betrieb einer Maschine, insbesondere einer industriellen Fertigungsanlage, einer Förderanlage, eines Krans, einer Seilzugvorrichtung, einer Winde oder dgl., mit die Maschine im Betrieb steuernden Aktoren und/oder Sensoren, die an eine Ansteuereinheit (2a, 2b, 2c) einer Steuerung (1) angeschlossen sind, und mit einer Busleitung (3) zur Übermittlung von Steuerungsbefehlen von einem Bedienteil (7a, 7b) zu der Ansteuereinheit (2a, 2b, 2c), mit einer Steckverbindung (8, 10) zwischen dem Bedienteil (7a, 7b) und der Steuerung (1) sowie mit einer Überwachungseinheit für ein Betriebssignal des Bedienteils (7a, 7b), wobei die Überwachungseinheit bei Ausbleiben des Betriebssignals eine Sicherheitsfunktion auslöst,
**dadurch gekennzeichnet, daß** das Betriebssignal der Heartbeat des verwendeten Bedienteils (7a, 7b) ist, daß der Betriebszustand des Bedienteils (7a, 7b) durch eine Erkennungseinheit (22) überwacht wird, daß das Ausgangssignal der Erkennungseinheit (22) ausgewertet wird, wobei bei eingeschaltetem Bedienteil (7a, 7b) der Heartbeat verarbeitet und bei ausgeschaltetem Bedienteil (7a, 7b) das Fehlen des Heartbeat ignoriert wird.

2. Steuerungsvorrichtung nach Anspruch 1,
**dadurch gekennzeichnet, daß** die Erkennungseinheit (22) den vom Bedienteil (7a, 7b) aufgenommenen Strom überwacht.

3. Steuerungsvorrichtung nach Anspruch 2,
**dadurch gekennzeichnet, daß** bei Überschreiten eines vorgegebenen Schwellwertes die Erkennungseinheit (22) ein Ausgangssignal für den Zustand "Bedienteil eingeschaltet" abgibt und bei Unterschreiten des Schwellwertes ein Ausgangssignal für den Zustand "Bedienteil ausgeschaltet" abgibt.

4. Steuerungsvorrichtung nach Anspruch 2 oder 3,
**dadurch gekennzeichnet, daß** das Ausgangssignal für "Bedienteil ausgeschaltet" ein aktives Signal, insbesondere ein digitales Spannungssignal ist.

5. Steuerungsvorrichtung nach einem der Ansprüche 1 bis 4,
**dadurch gekennzeichnet, daß** das Bedienteil (7a, 7b) zumindest eine Terminalplatine (37) als Schnittstelle zwischen Bedienelementen des Bedienteils und der Busleitung (3) aufweist.

6. Steuerungsvorrichtung nach Anspruch 5,
**dadurch gekennzeichnet, daß** der Heartbeat das Heartbeat-Signal der Terminalplatine (37) ist.

7. Steuerungsvorrichtung nach einem der Ansprüche 1 bis 6,
**dadurch gekennzeichnet, daß** das Bedienteil (7a, 7b) und die Ansteuereinheit (2a, 2b, 2c) in einen gemeinsamen Schaltkreis (14) für ein Hardware NOT-AUS eingebunden sind.

8. Steuerungsvorrichtung nach einem der Ansprüche 1 bis 7,
**dadurch gekennzeichnet, daß** das Bedienteil (7a, 7b) und alle Ansteuereinheiten (2a, 2b, 2c) über die Busleitung (3) in einen gemeinsamen Software NOT-AUS Kreis eingebunden sind.

9. Steuerungsvorrichtung nach einem der Ansprüche 1 bis 8,
**dadurch gekennzeichnet, daß** das Bedienteil (7a, 7b) über einen Funktionsbaustein (9) mit der Steuerung (1), vorzugsweise der Busleitung (3) und/oder einem gemeinsamen Schaltkreis (14) für ein Hardware NOT-AUS verbunden ist.

10. Steuerungsvorrichtung nach Anspruch 9,
**dadurch gekennzeichnet, daß** die Erkennungseinheit (22) in dem Funktionsbaustein (9) eingebaut ist.

11. Steuerungsvorrichtung nach Anspruch 9 oder 10,
**dadurch gekennzeichnet, daß** der Funktionsbaustein (9) einen Taster (25) zur Überbrückung des NOT-AUS Tasters (15) am Bedienteil (7a, 7b) aufweist.

12. Steuerungsvorrichtung nach Anspruch 11,
**dadurch gekennzeichnet, daß** der Überbrückungstaster (25) überwacht und seine Betätigung, vorzugsweise über die Busleitung (3), angezeigt ist.

13. Steuerungsvorrichtung nach Anspruch 12,
**dadurch gekennzeichnet, daß** mit Betätigung des Überbrückungstasters (25) ein Zeitglied gestartet wird, nach dessen Ablauf ein Software NOT-AUS ausgelöst wird.

14. Steuerungsvorrichtung nach einem der Ansprüche 9 bis 13,
**dadurch gekennzeichnet, daß** der Funktionsbaustein (9) über einen ersten Steckanschluß (8, 8a), mit der Steuerung (1), vorzugsweise mit der Busleitung (3), einer Spannungsversorgung (30) und dem Schaltkreis (14) des Hardware NOT-AUS verbunden ist und über einen zweiten Stecker (10) die Verbindung zum Bedienteil (7a, 7b) hergestellt ist.

15. Steuerungsvorrichtung nach Anspruch 14,
**dadurch gekennzeichnet, daß** der zweite Stecker (10) mit einer formschlüssig eingreifenden Schnellkupplung versehen ist.

16. Steuerungsvorrichtung nach einem der Ansprüche 1 bis 15,
**dadurch gekennzeichnet, daß** das Bussystem ein CAN-Bus, insbesondere ein CANopen-Bus ist.

## Claims

1. Control device for the operation of a machine, in particular an industrial manufacturing plant, a conveying system, a crane, a cable device, a winch or the like, with actuators and/or sensors controlling the machine in operation and connected to a drive unit (2a, 2b, 2c) of a control system (1), with a bus line (3) for the transmission of control commands from a control panel (7a, 7b) to the drive unit (2a, 2b, 2c), with a plug-and-socket connection (8, 10) between the control panel (7a, 7b) and the control system (1) and with a monitoring unit for an operating signal of the control panel (7a, 7b), wherein the monitoring unit triggers a safety function on failure of the operating signal,
**characterised in that** the operating signal is the heartbeat of the control panel (7a, 7b) used, **in that** the operating state of the control panel (7a, 7b) is monitored by a detection unit (22) and **in that** the output signal of the detection unit (22) is evaluated, the heartbeat being processed while the control panel (7a, 7b) is active and the absence of the heartbeat being ignored while the control panel (7a, 7b) is inactive.

2. Control device according to claim 1,
**characterised in that** the detection unit (22) monitors the current input of the control panel (7a, 7b).

3. Control device according to claim 2,
**characterised in that**, if a preset threshold value is exceeded, the detection unit (22) outputs an output signal for the state "control panel active" and, if the value falls below the threshold value, it outputs an output signal for the state "control panel inactive".

4. Control device according to claim 2 or 3,
**characterised in that** the output signal for "control panel active" is an active signal, in particular a digital voltage signal.

5. Control device according to any of claims 1 to 4,
**characterised in that** the control panel (7a, 7b) comprises at least one terminal board (37) acting as an interface between the control elements of the control panel and the bus line (3).

6. Control device according to claim 5,
**characterised in that** the heartbeat is the heartbeat signal of the terminal board (37).

7. Control device according to any of claims 1 to 6,
**characterised in that** the control panel (7a, 7b) and the drive unit (2a, 2b, 2c) are integrated into a common circuit (14) for a hardware emergency stop.

8. Control device according to any of claims 1 to 7,
**characterised in that** the control panel (7a, 7b) and all drive units (2a, 2b, 2c) are integrated into a common software emergency stop circuit via the bus line (3).

9. Control device according to any of claims 1 to 8,
**characterised in that** the control panel (7a, 7b) is connected to the control system (1), preferably the bus line (3) and/or a common circuit (14) for a hardware emergency stop, via a function element (9).

10. Control device according to claim 9,
**characterised in that** the detection unit (22) is installed in the function element (9).

11. Control device according to claim 9 or 10,
**characterised in that** the function element (9) comprises a push-button (25) for bridging the emergency stop button (15) on the control panel (7a, 7b).

12. Control device according to claim 11,
**characterised in that** the bridging button (25) is monitored and its operation is indicated, preferably via the bus line (3).

13. Control device according to claim 12,
**characterised in that** the operation of the bridging button (25) starts a timer on the expiry of which a software emergency stop is triggered.

14. Control device according to any of claims 9 to 13,
**characterised in that** the function element (9) is via a first plug-and-socket connection (8, 8a) connected to the control system (1), preferably to the bus line (3), a power supply (30) and the hardware emergency stop circuit (14), and the connection to the control panel (7a, 7b) is established via a second plug (10).

15. Control device according to claim 14,
**characterised in that** the second plug (10) is provided with a positively engaging quick-release coupling.

16. Control device according to any of claims 1 to 15,
**characterised in that** the bus system is a CAN bus, in particular a CAN open bus.

## Revendications

1. Dispositif de commande pour le fonctionnement d'une machine, en particulier d'une installation de fabrication industrielle, d'un convoyeur, d'une grue, d'un dispositif de traction par câble, d'un treuil, etc., avec des actionneurs et/ou capteurs qui commandent la machine, en fonctionnement, et qui sont reliés à une unité de commande (2a, 2b, 2c) d'une commande (1), et avec un bus (3) pour transmettre des ordres de commande d'une partie de manoeuvre (7a, 7b) à l'unité de commande (2a, 2b, 2c), avec un connecteur (8, 10) entre la partie de manoeuvre (7a, 7b) et la commande (1), et avec une unité de surveillance pour un signal de fonctionnement de la partie de manoeuvre (7a, 7b), l'unité de surveillance déclenchant une fonction de sécurité en l'absence du signal de fonctionnement,
**caractérisé en ce que** le signal de fonctionnement est le battement de coeur (heartbeat) de la partie de manoeuvre (7a, 7b) utilisée, **en ce que** l'état de fonctionnement de la partie de manoeuvre (7a, 7b) est surveillé par une unité de détection (22), **en ce que** le signal de sortie de l'unité de détection (22) est analysé, étant précisé que quand la partie de manoeuvre (7a, 7b) est en marche, le battement de coeur est traité et que quand la partie de manoeuvre (7a, 7b) est arrêtée, l'absence de battement de coeur est ignorée.

2. Dispositif de commande selon la revendication 1,
**caractérisé en ce que** l'unité de détection (22) surveille le courant reçu par la partie de manoeuvre (7a, 7b).

3. Dispositif de commande selon la revendication 2,
**caractérisé en ce qu'**au-dessus d'une valeur seuil prédéfinie, l'unité de détection (22) émet un signal de sortie pour l'état "partie de manoeuvre en marche", et au-dessous de la valeur seuil, elle émet un signal de sortie pour l'état "partie de manoeuvre arrêtée".

4. Dispositif de commande selon la revendication 2 ou 3,
**caractérisé en ce que** le signal de sortie pour "partie de manoeuvre arrêtée" est un signal actif, en particulier un signal de tension numérique.

5. Dispositif de commande selon l'une des revendications 1 à 4,
**caractérisé en ce que** la partie de manoeuvre (7a, 7b) comporte au moins une platine de terminal (37) comme interface entre des éléments de manoeuvre de la partie de manoeuvre et le bus (3).

6. Dispositif de commande selon la revendication 5,
**caractérisé en ce que** le battement de coeur est le signal de battement de coeur de la platine de terminal (37).

7. Dispositif de commande selon l'une des revendications 1 à 6,
**caractérisé en ce que** l'élément de manoeuvre (7a, 7b) et l'unité de commande (2a, 2b, 2c) sont intégrés dans un circuit commun (14) pour un arrêt d'urgence de matériel.

8. Dispositif de commande selon l'une des revendications 1 à 7,
**caractérisé en ce que** l'élément de manoeuvre (7a, 7b) et toutes les unités de commande (2a, 2b, 2c) sont intégrés par l'intermédiaire du bus (3) dans un circuit commun d'arrêt d'urgence de logiciel.

9. Dispositif de commande selon l'une des revendications 1 à 8,
**caractérisé en ce que** l'élément de manoeuvre (7a, 7b) est relié par l'intermédiaire d'un module fonctionnel (9) à la commande (1), de préférence au bus (3) et/ou à un circuit commun (14) pour un arrêt d'urgence de matériel.

10. Dispositif de commande selon la revendication 9,
**caractérisé en ce que** l'unité de détection (22) est intégrée dans le module fonctionnel (9).

11. Dispositif de commande selon la revendication 9 ou 10,
**caractérisé en ce que** le module fonctionnel (9) comporte une touche (25) pour court-circuiter le poussoir d'arrêt d'urgence (15) sur la partie de manoeuvre (7a, 7b).

12. Dispositif de commande selon la revendication 11,
**caractérisé en ce que** le poussoir de court-circuit (25) est surveillé et son actionnement, de préférence par l'intermédiaire du bus (3), est affiché.

13. Dispositif de commande selon la revendication 12,
**caractérisé en ce qu'**avec l'actionnement du poussoir de court-circuit (25) est démarré un élément de temporisation après l'écoulement duquel un arrêt d'urgence de logiciel est déclenché.

14. Dispositif de commande selon l'une des revendications 9 à 13,
**caractérisé en ce que** le module fonctionnel (9) est relié par un premier branchement (8, 8a) à la commande (1), de préférence au bus (3), à une alimentation en courant (30) et au circuit (14) de l'arrêt d'urgence de matériel, et la liaison avec la partie de commande (7a, 7b) est réalisée par l'intermédiaire d'un second connecteur (10).

15. Dispositif de commande selon la revendication 14,
**caractérisé en ce que** le second connecteur (10) est pourvu d'un accouplement rapide qui s'emboîte par complémentarité de forme.

16. Dispositif de commande selon l'une des revendications 1 à 15,
**caractérisé en ce que** le système de bus est un bus CAN, en particulier un bus CANopen.
